(19) Europäisches Patentamt

European Patent Office

Office européen des brevets

(11) **EP 1 679 659 A1**

(12) **EUROPEAN PATENT APPLICATION**

(43) Date of publication:
**12.07.2006 Bulletin 2006/28**

(51) Int Cl.:
*G06T 9/00* (2006.01)    *H04N 7/26* (2006.01)

(21) Application number: **05100189.9**

(22) Date of filing: **13.01.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **06.01.2005 EP 05290040**

(71) Applicant: **Thomson Licensing**
**92100 Boulogne-Billancourt (FR)**

(72) Inventors:
• **Le Meur, Olivier**
 **35160 Talensac (FR)**
• **Thoreau, Dominique**
 **35510 Cesson Sevigne (FR)**
• **Guillotel, Philippe**
 **35770 Vern sur Seiche (FR)**

(74) Representative: **Le Dantec, Claude**
 **46, Quai Alphonse Le Gallo**
 **92100 Boulogne-Billancourt (FR)**

(54) **Method and device for selecting quantization parameters in a picture using side information**

(57)    The invention concerns a method for selecting a quantization parameter for each pixel group in a picture. The quantization parameters are used for encoding the picture into a first number of bits (R). The method comprises:

- A first step (11, 12) for computing a preliminary quantization parameter $(q_i^{max})$ for each pixel group, the quantization parameters insuring a minimum picture quality when being used for encoding the picture into a second number of bits ($R_{min}$) lower than the first number of bits (R); and

- A second step (13, 14) for computing a final quantization parameter $(q_i^*)$ lower that or equal to the preliminary quantization parameter for each pixel group by reallocating the bit difference ($R-R_{min}$) between the first and second bit numbers to the pixel groups depending on their perceptual relevancy.

FIG. 1

Allocate a global target number of bits R for current picture corresponding to a reference quantization parameter $q_T$   ~ 10

Associate a rate distortion map to each MB   ~ 11

Compute a preliminary quantization parameter $q_i^{max}$ for each MB   12

Compute a second number of bits $R_{min}$ by summing the coding cost associated to preliminary quantization step   13

Side information → Compute a final quantization parameter $q_i^*$ in function of side information   14

Optimum bits allocation

EP 1 679 659 A1

**Description**

1. Field of the invention

The invention relates to a method and a device for selecting quantization parameters for each pixel group in a picture based on side information. These quantization parameters are further used for encoding this picture into a number of bits (R).

2. Background of the invention

Selective video compression scheme allows to have a spatial variation of the bit rate, and therefore a spatial variation of the perceived video quality, across pictures. For example, in the case of MPEG2 or MPEG4 standards, the quantization parameter used to encode each picture can vary within the picture at a macroblock or block level. In this way, the relevant areas of the pictures can be encoded at a higher quality than the non relevant areas. In the case of a video conference application, the background can be considered as a non relevant area while the head and shoulders of the speaker are considered as relevant areas. The aim of such a non homogeneous allocation of the number of bits is to significantly improve the overall perceived video quality. Therefore, in order to allocate a number of bits depending on spatial information, it is needed first to identify regions of interest and second to allocate more bits to these regions. The identification of regions of interest can be based for example on a computational model of bottom-up visual selective attention described in an article by O. Le Meur et al., entitled "Performance assessment of a visual attention system entirely based on a human vision modeling" and published in Proceedings of ICIP in October 2004.
Afterwards, more bits are allocated to encode these identified regions in order to improve their quality. In the article entitled "A ROI approach for hybrid image sequence coding", in Proc. IEEE International Conference on Image Processing, Vol.3, pp.245-249, Nov. 1994, E. Nguyen et al. use a hierarchy of regions of interest obtained from a motion-based segmentation and a weighted rate-distortion function in order to optimize the allocation of the number of bits. Other solutions as the one proposed by A. Leontaris et al. in "Region-of-interest video compression with a composite and a long-term frame", in Proc. 7th LASTED, International Conference on Computer Graphics and Imaging, Hawaï, August 17-19, 2004, consist in relaxing the number of bits constraint in the rate-distortion optimization depending on a factor which depends on the interest of the region. Thus, for a region of interest, this factor tends to zero in order to minimize the distortion term for this region. For a non relevant region, this factor is increased in order to minimize the coding cost (i.e. the number of bits used to encode this region) of this region.
At medium bit rate, in a context of video broadcast for example, these methods introduce very annoying spatio-temporal artifact in the background of the pictures. Indeed, a spatio-temporal artifact can effortlessly grab our visual attention creating therefore a fixation point. This affects the overall perceived video quality which is thus debased.

3. Summary of the invention

The invention aims at reaching the best trade-off between the video quality of relevant versus non relevant areas of the video sequence.
The invention concerns a method for selecting a quantization parameter for each pixel group in a picture. The quantization parameters are used for encoding the picture into a first number of bits (R). The method comprises:

- A first step for computing a preliminary quantization parameter $\left( q_i^{\max} \right)$ for each pixel group, the quantization parameters insuring a minimum picture quality when being used for encoding the picture into a second number of bits ($R_{min}$) lower than the first number of bits (R); and

- A second step for computing a final quantization parameter $\left( q_i^* \right)$ lower that or equal to the preliminary quantization parameter for each pixel group by reallocating the bit difference ($R-R_{min}$) between the first and second bit numbers to the pixel groups depending on their perceptual relevancy of.

The first step of the method according to the invention comprises the following sub-steps of:

- Associating a rate distortion map to each pixel group, the rate distortion map associating to each quantization parameter a distortion value and a number of bits;

- Computing a preliminary quantization parameter $\left( q_i^{\max} \right)$ for each pixel group in order that the associated distortion

$\left( D_i^{q_i^{\max}} \right)$ is substantially equal to a maximum distortion value $\left( D_i^{\max} \right)$ representing the minimum picture quality;

and the second step further comprises, before computing the final quantization parameter $\left( q_i^* \right)$, the following step:

- Computing a second number of bits ($R_{min}$) by summing the number of bits associated to the preliminary quantization parameters and given by the corresponding rate distortion map;

According to a preferred embodiment, the rate distortion map associated to a group of pixels is computed by encoding the group of pixels with various quantization parameters and by computing for each quantization parameter the distortion value and the number of bits value resulting from this encoding.
Advantageously, the rate distortion map is computed for a reduced number of quantization parameters and in that it is supplemented by interpolating missing distortion values and missing number of bits values from computed distortion values and number of bits values using an interpolation function.

According to the invention, the maximum distortion value $\left( D_i^{\max} \right)$ is fixed depending on the picture content. More precisely, the minimum picture quality is defined as a minimum peak signal-to-noise ratio value $\left( PSNR_i^{\min} \right)$. This minimum quality value $\left( PSNR_i^{\min} \right)$ equals the multiplication of a quality factor $\xi$, $0 \leq \xi \leq 1$, and a reference peak signal-to-noise ratio value $\left( PSNR_i^{q_T} \right)$.

Preferentially, the perceptual relevancy for a pixel group is characterized by a saliency map computed for this pixel group.
According to a particular embodiment, a pixel group is a block of 16x16 pixels.
The invention also concerns a device for selecting a quantization parameter for each pixel group in a picture. The quantization parameters are used for encoding the picture into a first number of bits (R). The device comprises:

- a memory for storing rate distortion maps associated to each pixel group, the rate distortion map associating to each quantization parameter a distortion value and a number of bits; and

- a processing unit for computing a preliminary quantization parameter $\left( q_i^{\max} \right)$ for each pixel group, the quantization parameters insuring a minimum picture quality when being used for encoding the picture into a second number of bits ($R_{min}$) lower than the first number of bits (R), for computing a final quantization parameter $\left( q_i^* \right)$ lower that or equal to the preliminary quantization parameter for each pixel group by reallocating the bit difference (R-$R_{min}$) between the first and second bit numbers depending on a perceptual relevancy of the pixel group.

The device is used to implement the method according to the invention.

4. <u>Drawings</u>

Other features and advantages of the invention will appear with the following description of some of its embodiments, this description being made in connection with the drawings in which:

- Figure 1 depicts the general flowchart of the method according to the invention;
- Figure 2 depicts a rate distortion map;
- Figure 3 depicts a rate distortion function where the rate is represented on the abscissa and the distortion is represented on the ordinate;
- Figure 4 depicts the flowchart of the third step of the method according to the invention; and
- Figure 5 depicts a device according to the invention.

5. <u>Detailed description of the invention</u>

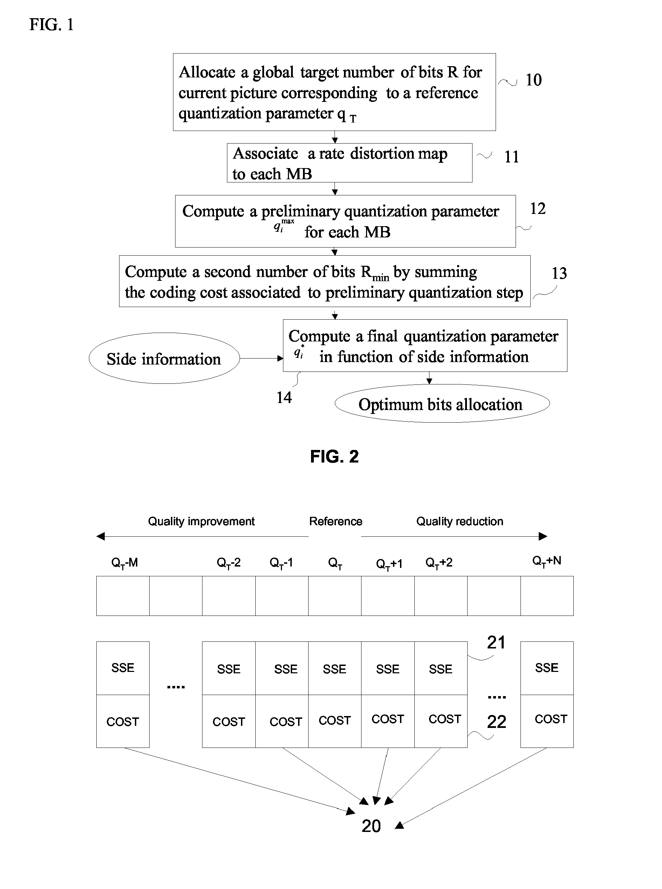

The invention concerns a method depicted on figure 1 supervised by external means (e.g. a broadcaster). In Figure 1, the represented boxes are purely functional entities, which do not necessarily correspond to physical separated entities. Namely, they could be developed in the form of software, or be implemented in one or several integrated circuits.

The objective of the invention is to reach the best trade-off between the video quality of relevant versus non relevant areas of the video sequence in order to improve the overall perceived video quality without introducing any spatio-temporal artifact. More particularly, it consists, from a reference quality level, in decreasing the quality to a minimum desired quality level specified in function of picture or video sequence content and in reallocating saved number of bits on the regions of interest.

The method according to the invention can be applied to a single picture or a video sequence of several pictures. Each picture is divided into K pixel groups, $U_i$, $i \in [1,K]$. Each pixel group can be for example a macroblock ($MB_i$), i.e. a block of 16x16 pixels or more generally a block of NxN pixels. For sake of clarity, the pixel group is defined as a MB hereinafter.

Several quality metrics are used below to estimate the distortion between an original image and corresponding coded image. The sum of squared errors (SSE) is defined for a MB as the sum over the whole MB of the squared differences between the original pixel values and the corresponding reconstructed pixel values after encoding the MB. The mean squared error (MSE) equals the SSE divided by the number of samples (i.e. pixels values). The peak signal-to-noise ratio (PSNR) can be deduced from the MSE and thus from SSE by the following formula: $PSNR = 10\log\left(\dfrac{255^2}{MSE}\right)$.

Thus the higher the distortion, the lower the PSNR. The PSNR metric used below is just an example. It is thus possible to use advanced metrics taking advantage of known properties of early stages of the human visual system.

In figure 1, the first step 10 consists in allocating a global target number of bits R to the current picture being encoded in order to reach a reference quality level. The value of R is determined for example by a rate control module as the one defined in ISO/IEC JTC1/SC29/WG11, *Test model 5,* 1993. This value can vary for example depending on the picture encoding type (e.g. intra picture, predictive picture). Indeed, a higher value of R is allocated for an intra coded picture (i.e. a picture in a video sequence coded without referencing any other picture) than for a predicted coded picture (i.e. a picture in a video sequence coded with reference to a previously encoded picture).

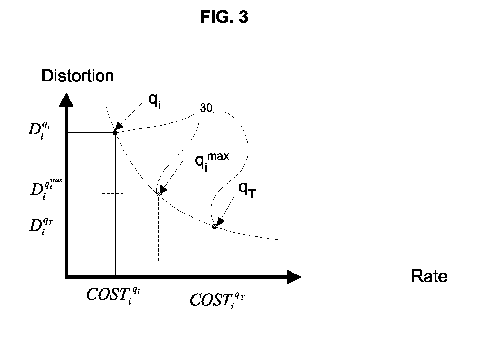

This global number of bits R can be reached by encoding the current picture with a single reference quantization parameter $q_T$, i.e. the same parameter for all $MB_i$. The value of $q_T$ referenced on figure 3 can be determined from the value R and rate distortion maps as thus build at next step or can be directly provided by the rate control module. A reference quality value (e.g. $PSNR_i^{q_T}$ derived from a distortion value $D_i^{q_T} = SSE_i^{q_T}$) can be derived for each $MB_i$ in the current picture from this value of $q_T$ and from the rate distortion map. The value of $q_T$ can also vary from macroblock to macroblock.

The method according to the invention consists in sharing this global number of bits R into a minimum number of bits $R_{min}$ in order to insure a minimum picture/video quality and a remaining number of bits $R_{interest}$, i.e. R= $R_{min}$+$R_{interest}$, in order to improve this quality on regions of interest.

In reference to figure 1, the second step 11 consists in associating a rate-distortion map to each $MB_i$ in the current picture. A rate-distortion map for a given $MB_i$ is depicted on figure 2. To this map corresponds a rate-distortion function as depicted on figure 3. The map building consists in associating to each quantization step size in a given range (e.g. [0-31]) specified by the coding standard, a vector 20 of two parameters: a distortion value 21 (e.g. SSE) and a coding cost (i.e. a number of bits) 22. A coding cost $COST_i^{q_i}$ represents the number of bits required to encode a given $MB_i$ using the quantization parameter $q_i$. One way to compute these vectors consists in encoding each $MB_i$ with several quantization parameters (e.g. 1, 2, ..., $q_i$, q,+1, q,+2, ...). After each coding, a control point 30 is available. Each control point corresponds to a quantization parameter $q_i$, to a coding cost $COST_i^{q_i}$ and to a distortion value $D_i^{qi}$ (e.g. $SSE_i^{qi}$).

From the $SSE_i^{qi}$, a quality value $PSNR_i^{qi}$ is derived. In order to avoid too many encoding steps, it is possible to encode each $MB_i$ with one quantization parameter out of two (i.e. 2, 4, ..., $q_i$, $q_i$+2, $q_i$+4, ...). The whole curve as depicted on figure 3 and thus the whole map as depicted on figure 2 are then constructed, for each $MB_i$, for example by a cubic or spline interpolation. It is also possible to only build a portion of the curve around the reference quantization parameter $q_T$. Another way to model this curve consists in using the statistical properties of the source data. Such statistical models are mainly based on the fact that the source image is a Gaussian source. The different parameters of the Gaussian model, i.e. the variance and the average, are directly estimated from the source data.

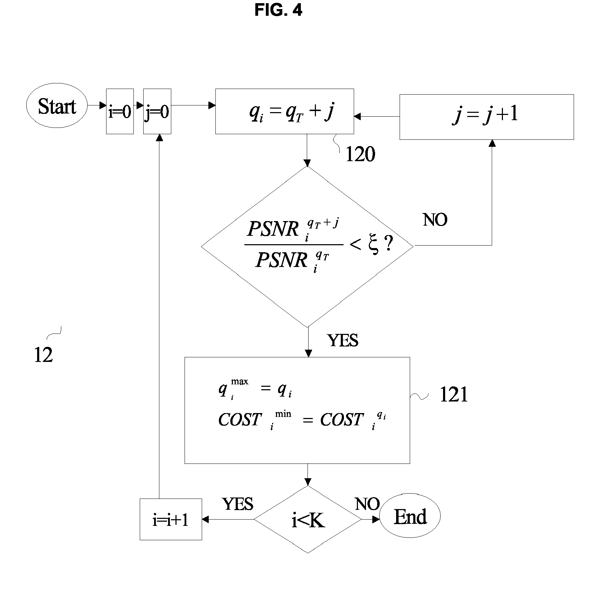

The third step 12 consists in allocating a minimum number of bits per $MB_i$ in order to reach a desired minimum video quality depending on the image content. This minimum video quality is specified by external means either automatically or manually (e.g. by a broadcaster). The detailed flowchart of this step is depicted on figure 4.

The objective of step 12 is to determine a preliminary quantization parameter $q_i^{max}$ for each $MB_i$, higher than the

reference quantization parameter $q_T$ in order to save a number of bits $R_{interest}$ when encoding $MB_i$ with $q_i^{max}$. Saved number of bits $R_{interest}$ can be further allocated to regions of interest. According to the invention, external means are setting a quality parameter $\xi$ ($\xi \in [0,1]$) in function of the picture/video content. It corresponds to the maximum PSNR variation from the reference quality value $\left( PSNR_i^{q_T} \right)$ that can be tolerated for the target application. For example, in the case of a head and shoulder sequence, $\xi$ is set about 0.75. In a context of video broadcast (at medium bit rate), $\xi$ should be close to one in order to avoid artifacts apparition on the background. For a video surveillance system, $\xi$ can be small in order to improve dramatically the quality over the regions of interest. Thus, for each $MB_i$ in the current picture, the minimum image quality $PSNR_i^{min}$ that can be tolerated equals $\xi PSNR_i^{q_T}$, where $PSNR_i^{q_T}$ is the PSNR value associated to $MB_i$ when it has been quantized with parameter $q_T$. The minimum image quality $\xi PSNR_i^{q_T}$ corresponds to a maximum distortion value $D_i^{max}$. The value $\xi$ can be constant per video sequence, per picture, or set adaptively for each $MB_i$ (for example by taking into account spatial properties and spatial masking capabilities of the MB).

Each quantization parameter $q_i$ associated to $MB_i$ is initialized to $q_T$. Step 120 consists for a $MB_i$ in increasing $q_i$ by a value j ($0 \leq j \leq N$) until $\dfrac{PSNR_i^{q_T+j}}{PSNR_i^{q_T}} < \xi$. The last $q_i$ value is referenced below as $q_i^{max}$ and corresponds to a distortion value $D_i^{q_i^{max}}$ as defined on figure 3. It corresponds to the maximum quantization parameter that can be used to reach the minimum picture quality which substantially equals $\xi PSNR_i^{q_T}$. For each $MB_i$, the associated coding cost $COST_i^{q_i^{max}}$ is derived from the rate distortion map.

At step 13, the picture coding cost $R_{min}$ is thus obtained by summing the coding $COST_i^{q_i^{max}}$ over the whole picture. It corresponds to the minimum number of bits required to reach the minimum picture quality set by external means.

In a fifth step 14, the saved number of bits $R_{interest} = R - R_{min}$ during previous step 12 is used to improve picture quality over identified regions of interest. The distribution of such quantity over the regions of interest is depending on side-information for example saliency maps. The goal of this step is to find, among all the possible quantization combinations $Q = (q_1, ... , q_K)$, where $q_i$ denotes the quantization selected for $MB_i$, the optimal solution $Q^* = \left( q_1^*, ... , q_K^* \right)$ which minimizes the total distortion for the current picture under a specific constraint :

$$Q^* = \arg\min_Q \sum_{i=1}^{K} SSE_i^{q_i} \text{ such that } \sum_{i=1}^{K} COST_i^{q_i^*} \leq R$$

To solve this constrained optimization problem, a widely used method firstly emphazised by Shoham et al. in "Efficient bit allocation for an arbitrary set of quantizers", IEEE Trans. Acoust., Speech, Signal Processing, vol. 36, pp. 1445-1453, Sept. 1988, is the Lagrange multiplier method. It consists in transforming the constraint problem in an unconstraint problem by computing the following Lagrangian cost:

$$J = \min_Q \sum_{i=1}^{K} (SSE_i^{q_i} + \lambda.COST_i^{q_i})$$

where $\lambda$ is the Lagrange multiplier.
Assuming that the rate-distortion is convex, the problem above can be written as the following equivalent problem:

$$J = \sum_{i=1}^{K} \min_{q_i}(SSE_i^{q_i} + \lambda.COST_i^{q_i})$$

Consequently, the global optimization can now be carried out independently for each $MB_i$. The step 13 thus consists in adapting the range of the quantization trials dynamically. A minimal quantization value $q_i*$ has to be selected for each $MB_i$ depending on side information. The optimum value of quantization $q_i*$ for a $MB_i$ will be then lower than or equal to $q_i^{max}$. In order to take into account side information, the Lagrangian cost function is thus further modified as follows to favor the quality over the relevant perceptual areas:

$$J = \sum_{i=1}^{K} \min_{q_i}(SSE_i^{q_i} + \theta_i.\lambda.COST_i^{q_i}) \qquad (1)$$

The relaxation factor, noted $\theta_i$, ranges from 0 to 1 : the closer $\theta_i$ to 0, the more the $MB_i$ is considered to be a relevant perceptual area. $\theta_i$ can be obtained using saliency maps as described by O. Le Meur et al., entitled "Performance assessment of a visual attention system entirely based on a human vision modeling" and published in Proceedings of ICIP in October 2004. The saliency map is providing a saliency value $s(x,y)$ per pixel (where $(x,y)$ denotes the pixel coordinates) that characterized its perceptual relevancy. The higher the $s(x,y)$ value is, the more revelant the pixel of coordinates $(x,y)$ is. In order to get a single saliency value $S_i$ per $MB_i$ it is thus possible to average the values over $MB_i$ or to take the median value over $MB_i$. The saliency values $S_i$ are further normalized so that they belong to the range [0; 1]. Finally, the value $\theta_i$ is set equal to $(1- S_i)$.

The optimal solution $Q*$ is determined by optimizing equation (1) using the bisection method described in an article by Y. Shoham et al. entitled "Efficient bit allocation for an arbitrary set of quantizers", IEEE Trans. Acoust., Speech, Signal Processing, vol. 36, pp. 1445-1453. Other methods as dynamic programming approach can be used. In other cases, more complex approaches can be used as the one described in "Bit allocation for dependent quantization with applications to multiresoltuion and MPEG video coders", IEEE Trans. Image Proc., vol. 3, n°5, pp. 533-545, sep. 1994 by K. Ramchandran et al. This step allows to reallocate the number of bits $R_{interest}$ over the various $MB_i$ depending on their perceptual relevancy so that the number of bits used to encode the whole picture does not exceed the value R specified by external means (e.g. rate control module).

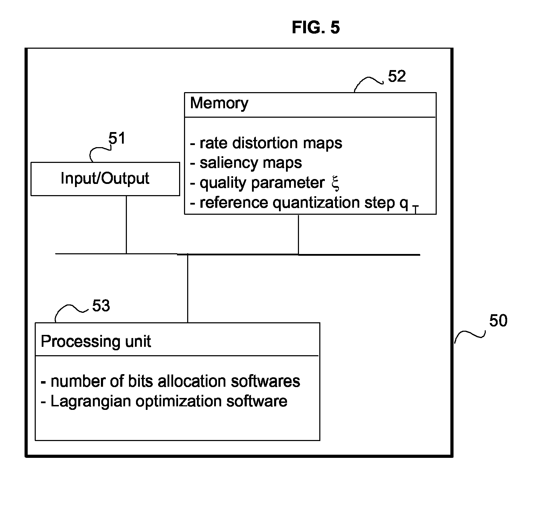

The invention concerns also a device depicted on figure 5 that implements the method described previously. Only the basic elements of the device are represented on figure 5. The device according to the invention includes a memory 52. The rate-distortion maps, the quality parameter the reference quantization step qnd the saliency maps are stored in this memory. The device includes also a processing unit 53 as a microprocessor or a similar element. This unit implements the processing softwares as the number of bits allocation softwares and the Lagrangian optimization software. These softwares use the parameters stored into the memory. Besides, the device includes an input/output interface 51 to receive the input video signal, and to transmit the signal processed by the method 12, 13 according to the invention. This device can be further included in an video encoder.

**Claims**

1. Method for selecting a quantization parameter for each pixel group in a picture, said quantization parameters being used for encoding said picture into a first number of bits (R), **characterized in that** it comprises:

   - A first step (11, 12) for computing a preliminary quantization parameter $\left( q_i^{max} \right)$ for each pixel group, said quantization parameters insuring a minimum picture quality when being used for encoding said picture into a second number of bits ($R_{min}$) lower than the first number of bits (R); and

   - A second step (13, 14) for computing a final quantization parameter $\left( q_i^* \right)$ lower that or equal to said preliminary quantization parameter for each pixel group by reallocating the bit difference ($R-R_{min}$) between the first and second bit numbers to the pixel groups depending on their perceptual relevancy.

2. Method according to claim 1, **characterized in that** the first step comprises the following sub-steps:

   - Associating (11) a rate distortion map to each pixel group, said rate distortion map associating to each quantization parameter a distortion value and a number of bits;

   - Computing (12) a preliminary quantization parameter $\left( q_i^{max} \right)$ for each pixel group in order that the associated

distortion $\left( D_i^{q_i^{\max}} \right)$ is substantially equal to a maximum distortion value $\left( D_i^{\max} \right)$ representing the minimum picture quality;

and **in that** the second step further comprises, before computing (14) the final quantization parameter $\left( q_i^{*} \right)$, the following step:

- Computing (13) the second number of bits ($R_{\min}$) by summing the number of bits associated to said preliminary quantization parameters and given by the corresponding rate distortion map.

3. Method according to claim 2, **characterized in that** the rate distortion map associated to a group of pixels is computed by encoding said group of pixels with various quantization parameters and by computing for each quantization parameter the distortion value and the number of bits value resulting from this encoding.

4. Method according to claim 3, **characterized in that** the rate distortion map is computed for a reduced number of quantization parameters and **in that** it is supplemented by interpolating missing distortion values and missing number of bits values from computed distortion values and number of bits values using an interpolation function.

5. Method according to any of claims 2 to 4, **characterized in that** said maximum distortion value $\left( D_i^{\max} \right)$ is fixed depending on the picture content.

6. Method according to any of claims 2 to 5, **characterized in that** said minimum picture quality is defined as a minimum peak signal-to-noise ratio value $\left( PSNR_i^{\min} \right)$.

7. Method according to claim 6, **characterized in that** said minimum quality value $\left( PSNR_i^{\min} \right)$ equals the multiplication of a quality factor $\xi$, $0 \leq \xi \leq 1$, and a reference peak signal-to-noise ratio value $\left( PSNR_i^{q_T} \right)$.

8. Method according to any of claim 1 to 7, **characterized in that** the perceptual relevancy for a pixel group is **characterized by** a saliency map computed for this pixel group.

9. Method according to any of claims 1 to 8, **characterized in that** a pixel group is a block of 16x16 pixels.

10. Device for selecting a quantization parameter for each pixel group in a picture, said quantization parameters being used for encoding said picture into a first number of bits (R), **characterized in that** it comprises:

- a memory (52) for storing rate distortion maps associated to each pixel group, said rate distortion map associating to each quantization parameter a distortion value and a number of bits; and

- a processing unit (53) for computing a preliminary quantization parameter $\left( q_i^{\max} \right)$ for each pixel group, said quantization parameters insuring a minimum picture quality when being used for encoding said picture into a second number of bits ($R_{\min}$) lower than the first number of bits (R), for computing a final quantization parameter $\left( q_i^{*} \right)$ lower that or equal to said preliminary quantization parameter for each pixel group by reallocating the bit difference (R-$R_{\min}$) between the first and second bit numbers to the pixel groups depending on their perceptual relevancy.

11. Device according to claim 10, **characterized in that** it is used to implement the method according to any of claims 1 to 9.

FIG. 1

| Allocate a global target number of bits R for current picture corresponding to a reference quantization parameter $q_T$ | $\sim$ 10 |

Associate a rate distortion map to each MB  $\sim$  11

Compute a preliminary quantization parameter $q_i^{max}$ for each MB  12

Compute a second number of bits $R_{min}$ by summing the coding cost associated to preliminary quantization step  13

Side information → Compute a final quantization parameter $q_i^*$ in function of side information

14

Optimum bits allocation

FIG. 2

Quality improvement    Reference    Quality reduction

| $Q_T$-M | | $Q_T$-2 | $Q_T$-1 | $Q_T$ | $Q_T$+1 | $Q_T$+2 | | $Q_T$+N |
|---------|--|---------|---------|-------|---------|---------|--|---------|
| | | | | | | | | |

21

| SSE | .... | SSE | SSE | SSE | SSE | SSE | .... | SSE |
|-----|------|-----|-----|-----|-----|-----|------|-----|
| COST | | COST | COST | COST | COST | COST | 22 | COST |

20

**FIG. 3**

Distortion

$D_i^{q_i}$

$q_i$

30

$q_i^{max}$

$D_i^{q_i^{max}}$

$q_T$

$D_i^{q_T}$

Rate

$COST_i^{q_i}$

$COST_i^{q_T}$

**FIG. 4**

**FIG. 5**

52

Memory

- rate distortion maps
- saliency maps
- quality parameter $\xi$
- reference quantization step $q_T$

51

Input/Output

53

Processing unit

- number of bits allocation softwares
- Lagrangian optimization software

50

**European Patent Office**

**EUROPEAN SEARCH REPORT**

Application Number

EP 05 10 0189

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SENGUPTA S ET AL: "Enhancing selected facial features in very low bit-rate video sequences" PROCEEDINGS 2001 INTERNATIONAL CONFERENCE ON IMAGE PROCESSING. ICIP 2001. THESSALONIKI, GREECE, OCT. 7 - 10, 2001, INTERNATIONAL CONFERENCE ON IMAGE PROCESSING, NEW YORK, NY : IEEE, US, vol. VOL. 1 OF 3. CONF. 8, 7 October 2001 (2001-10-07), pages 485-488, XP010564902 ISBN: 0-7803-6725-1 * page 486, right-hand column, paragraph 4 - page 487, left-hand column, paragraph 5 * | 1-11 | INV.<br>G06T9/00<br>H04N7/26 |
| X | CHAI D ET AL: "Foreground/background bit allocation for region-of-interest coding" IMAGE PROCESSING, 2000. PROCEEDINGS. 2000 INTERNATIONAL CONFERENCE ON SEPTEMBER 10-13, 2000, PISCATAWAY, NJ, USA,IEEE, vol. 2, 10 September 2000 (2000-09-10), pages 923-926, XP010530136 ISBN: 0-7803-6297-7 * page 923, left-hand column, line 1 - page 925, left-hand column, paragraph 4 * | 1-11 | TECHNICAL FIELDS SEARCHED (IPC)<br><br>G06T<br>H04N |

-/--

The present search report has been drawn up for all claims

| Place of search | Date of completion of the search | Examiner |
|---|---|---|
| Munich | 7 April 2006 | Schoeyer, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 05 10 0189

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SENGUPTA S ET AL: "Percetually motivated bit-allocation for H.264 encoded video sequences" PROCEEDINGS 2003 INTERNATIONAL CONFERENCE ON IMAGE PROCESSING. ICIP-2003. BARCELONA, SPAIN, SEPT. 14 - 17, 2003, INTERNATIONAL CONFERENCE ON IMAGE PROCESSING, NEW YORK, NY : IEEE, US, vol. VOL. 2 OF 3, 14 September 2003 (2003-09-14), pages 797-800, XP010669954 ISBN: 0-7803-7750-8 * the whole document * | 1-11 | |
| A | SHOHAM Y ET AL: "EFFICIENT BIT ALLOCATION FOR AN ARBITRARY SET OF QUANTIZERS" IEEE TRANSACTIONS ON ACOUSTICS, SPEECH AND SIGNAL PROCESSING, IEEE INC. NEW YORK, US, vol. 36, no. 9, 1 September 1988 (1988-09-01), pages 1445-1453, XP000606108 ISSN: 0096-3518 * the whole document * | 1-11 | |

TECHNICAL FIELDS
SEARCHED      (IPC)

The present search report has been drawn up for all claims

| Place of search | Date of completion of the search | Examiner |
|---|---|---|
| Munich | 7 April 2006 | Schoeyer, M |

EPO FORM 1503 03.82 (P04C01)